# EUROPÄISCHE PATENTSCHRIFT

(11) **EP 0 933 756 B1**
(45) Veröffentlichungstag und Bekanntmachung des Hinweises auf die Patenterteilung: **13.07.2005**
(21) Anmeldenummer: 99890032.8
(22) Anmeldetag: 01.02.1999
(51) Int. Cl.: G10D 3/16, B29D 22/00

(54) **Verfahren zum Herstellen einer hohlen Streichinstrument-Bogenstange**
Method for manufacturing an hollow rod for a string instrument bow
Procédé de fabrication d'une baguette creuse pour un archet d'instrument à cordes

(30) Priorität: 02.02.1998 AT 16898
(43) Veröffentlichungstag der Anmeldung: 04.08.1999
(73) Patentinhaber: Wetzlinger, Andreas, 1090 Wien (AT)
(72) Erfinder: Wetzlinger, Andreas, 1090 Wien (AT)
(74) Vertreter: Weinzinger, Arnulf, Dipl.-Ing.

(56) Entgegenhaltungen:
- WO-A-98/01846
- DE-A- 4 014 894
- US-A- 3 456 544
- US-A- 4 015 501
- DATABASE WPI Section Ch, Week 198442 Derwent Publications Ltd., London, GB; Class A32, AN 1984-258913 XP002161571 & JP 59 155897 A (MITSUBISHI RAYON CO), 5. September 1984 (1984-09-05)

## Beschreibung

Die Erfindung betrifft ein Verfahren zum Herstellen einer hohlen Streichinstrument-Bogenstange.

In der WO 92/09068 A ist ein Bogen für ein Streichinstrument beschrieben, dessen Stange hohl ausgebildet ist, um die Unterbringung einer Einrichtung zur Einstellung der Steifigkeit der Bogenstange zu ermöglichen. Die Bogenstange kann dabei beispielsweise aus Kunststoffmaterial geformt werden, wozu offensichtlich eine Form mit einem Kern zu verwenden ist, in die das Kunstharzmaterial gegossen bzw. gespritzt wird. Es ist davon auszugehen, dass bei einer solchen Bogenstange aus Kunstharzmaterial eine bloß geringe Festigkeit erzielbar ist bzw. dass die Bogenstange auf Grund der notwendigen Wandstärke eine relativ große Masse bzw. ein hohes Gewicht aufweisen wird. Damit sind dem Spielen mit einem derartigen Bogen Grenzen gesetzt.

Es wurde auch bereits vorgeschlagen, für die Herstellung von Bogenstangen faserverstärkte Kunststoffmaterialien, etwa Carbonfasermaterialien, insbesondere unter Verwendung eines innenliegenden Stangenkerns, einzusetzen, vgl. beispielsweise WO 84/02792 A und DE 40 14 894 A. Der Stangenkern wird dabei im Hinblick auf die geringe Masse aus Balsaholz gewählt; dieser Stangenkern wird im Hinblick auf das Wickeln des faserverstärkten Kunststoffmaterials als notwendig angesehen.

In der WO 98/01846 A wurde eine Bogenstange aus faserverstärktem Kunststoffmaterial und mit einem leichtgewichtigen Kern, insbesondere aus Balsaholz, vorgeschlagen, wobei eine möglichst leichtgewichtige, nichtsdestoweniger steife Ausbildung der Bogenstange, mit einem bestimmten Verhältnis von Steifigkeit zu Masse, angestrebt wird, v.a. um damit besondere Spieltechniken zu ermöglichen.

In diesem Zusammenhang wäre es wünschenswert, zur weiteren Gewichtsreduzierung sowie zur Eliminierung von eventuellen nachteiligen Dämpfungseigenschaften die Bogenstange hohl, jedoch mit der angestrebten Festigkeit, Elastizität und geringen Masse, herzustellen, wobei überdies die Steifigkeit bei der Herstellung problemlos dimensioniert werden können soll.

Hier ist es aus der Zusammenfassung WPI, Section Ch, Week 198442, Derwent Publications Ltd., London, Class A32, AN 1984-258913, XP002161571 (JP 59-155897 A) bereits bekannt, eine hohle Bogenstange aus faserverstärktem Kunststoffmaterial unter Verwendung eines Dorns herzustellen, der nach Verfestigen des Kunststoffmaterials aus dem erhaltenen Stangenkörper herausgezogen wird.

Es ist Aufgabe der Erfindung, ein Verfahren zur Herstellung einer hohlen Bogenstange vorzusehen, wobei auf einfache Weise die Produktion von äußerst leichtgewichtigen, nichtsdestoweniger festen und eine bestimmte Steifigkeit aufweisenden hohlen Bogenstangen ermöglicht wird.

Zur Lösung dieser Aufgabe sieht die Erfindung ein Verfahren wie in Anspruch 1 definiert vor. Vorteilhafte Ausgestaltungen des Verfahrens sind in den abhängigen Ansprüchen angegeben.

Mit der erfindungsgemäßen Vorgangsweise wird der vorstehenden Zielsetzung in vorteilhafter Weise entsprochen, und es wird durch die Aufbringung des Innendrucks auf das faserverstärkte Kunststoffmaterial, z.B. ein Laminat, während des Aushärtevorgangs ein dichter Verbund der Fasern erreicht; demgemäß kann der Harzgehalt im faserverstärkten Kunststoffmaterial gering gehalten werden, und es wird eine Verpressung mit eng aneinander gelegten Fasern ermöglicht. Dadurch kann einerseits eine hohe Festigkeit der hohlen Bogenstange gesichert werden, und andererseits wird eine besonders leichtgewichtige Konstruktion erhalten; zufolge des erzielbaren dünnwandigen Hohlprofils der Bogenstange wird auch die erforderliche Elastizität des Bogens gewährleistet, wobei Steifigkeit bzw. Elastizität problemlos durch das jeweils verwendete Fasermaterial in Verbindung mit dem Harzgehalt und dem aufgebrachten Innendruck festgelegt werden können. Durch den Innendruck wird der Faserwerkstoff gegen die Werkzeug- bzw. Formflächen gepresst, wobei zweckmäßigerweise eine zwei- oder mehrteilige Form verwendet wird, und es wird so ein optimaler Verbund der Fasern mit dem Matrixsystem erreicht.

Für die Erzeugung der gewünschten dünnwandigen Profile mit der definierten Wandstärke hat es sich dabei bei Versuchen als zweckmäßig herausgestellt, wenn ein Innendruck in der Größenordnung von einigen bar, beispielsweise 3 bis 15 bar, aufgebracht wird.

Eine besonders einfache Herstellungsweise wird ermöglicht, wenn ein unter Druck expandierender hohler Kern, z.B. ein Fo-lienschlauch oder ein dünnwandiges Rohr, verwendet wird. Der Folienschlauch oder dergl. hohle Kern kann dabei nach Aushärtung des Kunststoffes einfach im Inneren der Bogenstange verbleiben, ohne deren Kennwerte, wie Masse, Steifigkeit, in einem wesentlichen Ausmaß zu beeinflussen.

Für die Aufbringung des Innendrucks kann einfach das Innere des hohlen Kerns mit einem Druckmedium beaufschlagt werden, am einfachsten mit einem gasförmigen Druckmedium, insbesondere Luft. Es kann jedoch auch ein flüssiges Druckmedium eingesetzt werden, insbesondere dann, wenn das Druckmedium auch zur Zufuhr von Wärmeenergie für die Aushärtung temperiert wird. An sich wäre es aber auch denkbar, eine Druckbeaufschlagung mit Heißluft oder dergl. vorzunehmen.

Sofern der verwendete hohle Kern eine nur geringe Formfestigkeit oder keine Formfestigkeit aufweisen sollte, etwa im Fall eines Folienschlauches oder Ballons, ist es sodann günstig, wenn in das Innere des hohlen Kerns eine als Abstützung beim Legen des Fasermaterials wirksame Lanze eingeführt wird. Durch diese Lanze kann dann im weiteren in vorteilhafter Weise auch gleich das Druckmedium zugeführt werden; hierfür ist die Lanze mit entsprechenden Zu- und Abführkanälen auszubilden.

Anstatt der Beaufschlagung mit einem gasförmigen oder flüssigen Druckmedium für die Aufbringung des Innendrucks ist es vielfach auch, etwa zur Erzielung einer besonders gleichmäßigen Wandstärke auch bei nicht ganz exakt gleichmäßig verlegten bzw. gewickelten Faserwerkstoffen oder Laminaten, von Vorteil, wenn zum Aufbringen des Innendrucks ein keilförmiger Preßteil, der gegebenenfalls durch die Abstützungs-Lanze gebildet wird, innerhalb des Fasermaterials vorbewegt wird.

Aus Festigkeitsgründen ist es weiter von Vorteil, wenn das Fasermaterial in mehreren Lagen angebracht wird. Dabei ist es zum Verhindern eines Aufspleißens der Bogenstangen und zur Erzielung einer hohen Eindrückfestigkeit insbesondere günstig, wenn die Lagen mit längsorientierten Fasern, vorzugsweise Carbonfasern, und mit querorientierten Fasern, vorzugsweise Glasfasergewebe, angebracht werden. Die so erzeugten Bogenstangen zeichnen sich durch eine besonders hohe Eindrückfestigkeit aus, und dies sogar bei Wandstärken z.B. im Bereich von bloß 0,3 mm bis 1 mm. Die Verwendung von Glasfasermaterial für die querorientierten Faserlagen ist auch insofern von Vorteil, als sich diese Glasfasern vergleichsweise gut um kleine Radien legen lassen.

Um die Herstellung weiter zu vereinfachen, können als faserverstärktes Kunststoffmaterial Prepregs verwendet werden. Im Hinblick auf den angestrebten Wandaufbau mit einem dichten Faserverbund beträgt der Harzanteil zweckmäßigerweise 30%-50%, vorzugsweise ca. 40%.

Als Harze eignen sich bekannte Harze, wie beispielsweise Epoxy-, Polyester- und Phenolharze, aber auch Thermoplaste.

Denkbar ist auch eine Herstellungsweise, bei der zuerst das Fasermaterial - noch ohne Harz - in die Form eingelegt und dann mit dem Kunststoffmaterial, z.B. durch Bestreichen, getränkt wird. Es können auch sog. Preforms verwendet werden, also Faserwerkstoffe ohne Harz, die bereits in ihrer Form weitgehend - z.B. durch Nadeln oder Verweben - fixiert werden, und hier ist es für eine rasche, gut steuerbare Herstellung günstig, wenn als Fasermaterial Preforms in die Form eingebracht werden, wonach der hohle Kern mit einem Druckmedium beaufschlagt und der Kunststoff unter Druck in die Form eingespritzt wird.

Zur Erzielung eines vorgegebenen Dekors und zur Vermeidung von nachfolgenden Bearbeitungen ist es auch von Vorteil, wenn vor dem Einbringen des Fasermaterials eine Deckfolie in die Form eingelegt wird.

Die hohle Streichinstrument-Bogenstange, die mit dem erfindungsgemäßen verfahren herstellbar ist, hat eine Rohrwand aus Faserwerkstoff mit einem Harzanteil von z.B. 30%-50%, vorzugsweise ca. 40%. Die Wandstärken der Bogenstangen können über die gesamte Bogenlänge konstant sein, sie können gegebenenfalls aber auch, etwa im Einklang mit dem variierenden Gesamtquerschnitt der Bogenstange, über die Längserstreckung der Bogenstange definiert veränderlich ausgeführt sein. Je nach Verwendungszweck der Bogenstange ist die Rohrwand überdies dünner oder dicker. So hat bei Bogenstangen für Geigen oder Bratschen die Rohrwand z.B. eine Wandstärke von 0,3 mm bis 1 mm, vorzugsweise ca. 0,7 mm. Im Fall einer Bogenstange für Cellos beträgt die Wandstärke dagegen vorzugsweise 0,4 mm bis 1,5 mm, insbesondere ca. 0,8 mm. Für Kontrabass-Bögen weist die Rohrwand eine Wandstärke von z.B. 0,5 mm bis 2 mm, vorzugsweise ca. 1 mm, auf. Bei diesen Wandstärken wie vorstehend angegeben wird einerseits eine leichtgewichtige Ausbildung und andererseits nichtsdestoweniger eine steife, eindrückfeste Konstruktion erhalten. An sich können die Wandstärken bei der erfindungsgemäßen Herstellung von Bogenstangen aber auch dicker bemessen werden, wenn weniger leichtgewichtige Bogenstangen, bis hin zu Bogenstangen mit einem Gewicht vergleichbar den gängigen Bogenstangen, akzeptiert werden. In diesem Fall können die Wandstärken bei Geigen- oder Bratschen-Bögen auch beispielsweise 2 mm betragen, im Fall von Cello-Bögen 2,5 mm und im Fall von Bass-Bögen 3 mm.

Die Erfindung wird nachfolgend anhand von Ausführungsbeispielen und unter Bezugnahme auf die Zeichnung noch weiter erläutert. Im Einzelnen zeigen in der Zeichnung:
Fig.1 einen schematischen Längsschnitt durch einen Teil einer Bogenstange in einer zweiteiligen Form während der Herstellung mit Hilfe eines Folienschlauches;
Fig.2 einen Querschnitt durch diese Bogenstange in der Form, gemäß der Linie II-II in Fig.1, jedoch in größerem Maßstab;
die Fig.3 und 4 in schematischen Längsschnitt-Darstellungen ähnlich Fig.1 alternative Herstellungstechniken, bei denen eine Lanze (Fig.3) bzw. ein als Keil wirkender konischer Pressteil (Fig.4) in das Innere des Bogenstangen-Laminats eingeführt wird; und
Fig.5 eine aufgebrochene schaubildliche Darstellung eines Teiles einer Bogenstange, zur Veranschaulichung des Wandaufbaus derselben mit unterschiedlichen Lagen.

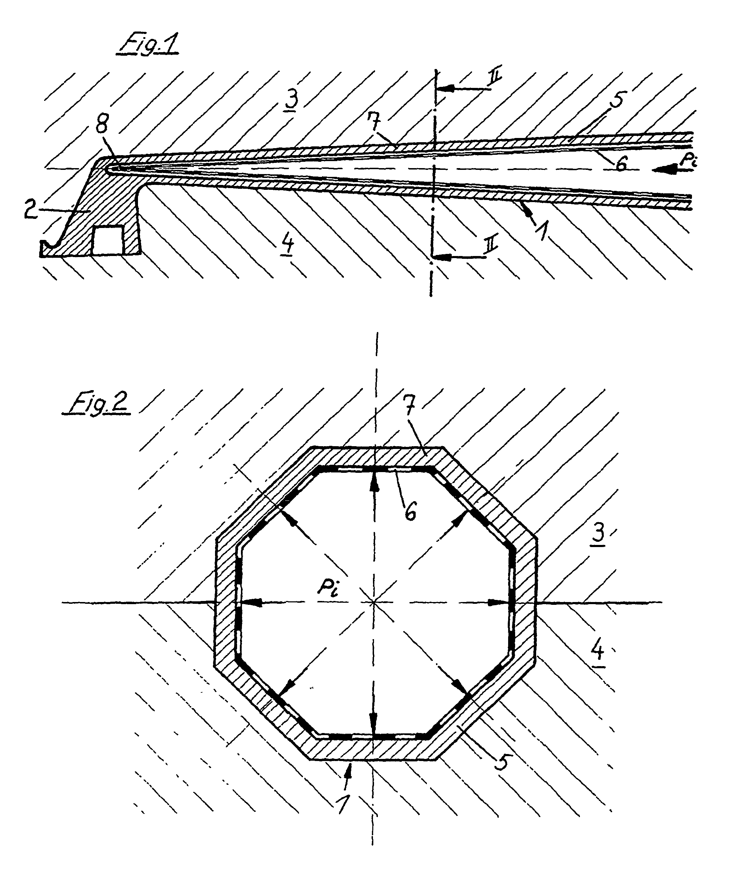

Beim in Fig.1 und 2 schematisch veranschaulichten Herstellungsverfahren wird eine Bogenstange 1 mit einem Kopf 2 in einer zweiteiligen Form mit einer oberen Formhälfte 3 und einer unteren Formhälfte 4 aus einem Laminat aus faserverstärktem Kunststoffmaterial 5 hergestellt, wobei ein Folienschlauch 6 innerhalb des Laminats 5 verwendet wird, dessen Inneres mit einem Innendruck Pᵢ beaufschlagt wird, wenn das Laminat 5 ausgehärtet wird, um so das Laminat 5 gegen die Formhälften 3, 4, d.h. die Wände des FormHohlraumes, zu pressen. Dadurch kann eine vergleichsweise dünne Rohrwand 7 für die Bogenstange 1 erzielt werden, in der die Fasern bei einem geringen Harzgehalt eng aneinander liegen. Die Wandstärke der so erzeugten dünnwandigen, leichtgewichtigen Profile kann dabei innerhalb enger Grenzen definiert werden. Der Folienschlauch 6 kann an seinem vorderen Ende 8 beispielsweise durch Verknoten oder Verschweißen geschlossen werden, um dort das Austreten von Druckmedium zu verhindern. Als Druckmedium für die Aufbringung des Innendrucks Pᵢ wird z.B. einfach Druckluft mit einem Druck von 3 bar bis 10 oder 15 bar verwendet. Es kann jedoch auch ein anderes gasförmiges oder aber ein flüssiges Druckmedium, eventuell temperiert, eingesetzt werden.

Der Folienschlauch 6 oder allgemein ein dünnwandiger, elastischer, rohrförmiger hohler Kern kann im einfachsten Fall im Inneren der Bogenstange 1 verbleiben, wenn das Laminat 5 ausgehärtet ist. Es ist jedoch auch denkbar, den Folienschlauch bzw. hohlen Kern 6 nach der Aushärtung zu entfernen. Theoretisch wäre es, im Hinblick auf bestimmte gewünschte Spieleigenschaften des Streichinstruments-Bogens, auch denkbar, im Nachhinein den Hohlraum der Bogenstange 1 auszuschäumen.

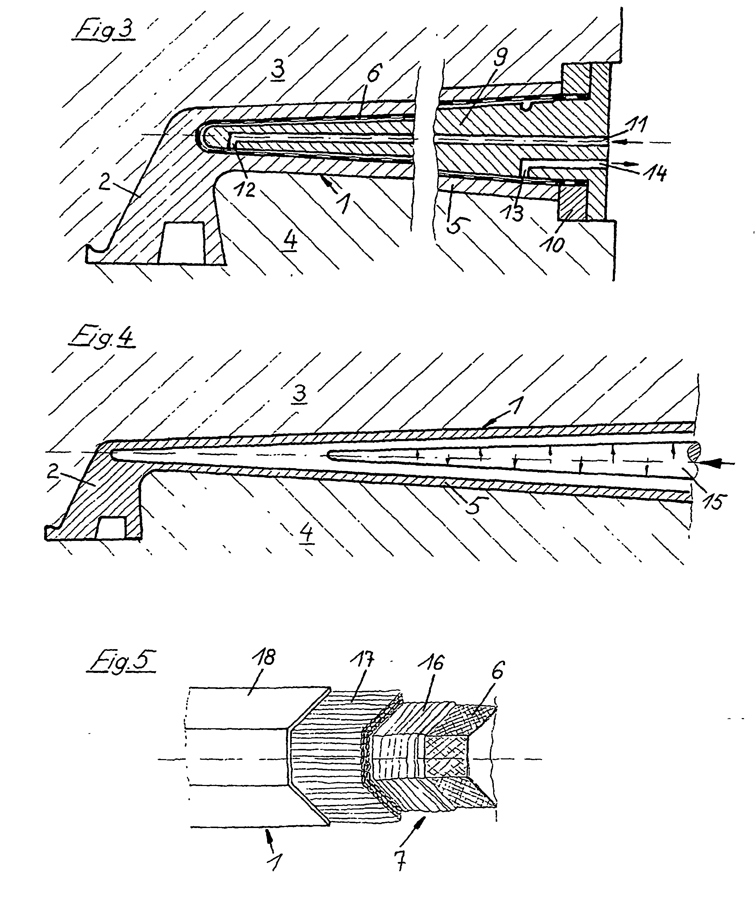

Gemäß Fig.3 wird bei der Herstellung der Bogenstange 1 ebenfalls ein mit einem Druckmedium beaufschlagter Folienschlauch 6 verwendet. In Fig.3 ist jedoch zusätzlich eine zur Abstützung beim Legen des Laminats 5 dienende Lanze 9 in das Innere des Folienschlauchs 6 eingeführt. Diese Stützkern-Lanze 9 dient überdies zur Zuführung des verwendeten Druckmediums, d.h. es ist nicht notwendig, die Lanze 9 vor der Beaufschlagung des Inneren des Folienschlauchs 6 bzw. Laminats 5 mit dem Druckmedium aus der Anordnung zurückzuziehen. Für die Druckmedium-Beaufschlagung ist der Folienschlauch 6, etwa mit Hilfe eines Klemmrings 10, dicht am hinteren Ende der Lanze 9 fixiert, und das Druckmedium mit dem Druck Pᵢ wird in Pfeilrichtung durch eine Mittenbohrung 11 der Lanze 9 sowie eine vordere Querbohrung 12 in den Zwischenraum zwischen der Lanze 9 und dem Folienschlauch 6 zugeführt; von dort gelangt das Druckmedium, das wiederum gasförmig oder flüssig sein kann, durch eine hintere Querbohrung 13 und eine daran anschließende hintere, kurze Längsbohrung 14 wieder aus der Anordnung heraus. Hier ist es mit besonderem Vorteil möglich, ein temperiertes, insbesondere flüssiges Druckmedium während der Aushärtung des Laminats 5 zirkulieren zu lassen.

Nach dem Aushärten der Bogenstange 1 kann auch hier der Folienschlauch 6 einfach im Stangeninneren belassen werden, so daß nur die Lanze 9 aus dem Stangeninneren herausgezogen wird.

Wie aus den Darstellungen in den Fig.1 und 3 sowie auch in Fig.4 ersichtlich ist, haben die Bogenstangen 1 in den gezeigten Beispielen in herkömmlicher Weise eine sich zum vorderen Ende, zum Kopf 2 hin, verjüngende Form; dieser Umstand kann dazu genützt werden, um die Beaufschlagung der Innenseite des Laminats 5 mit dem erforderlichen Druck mit einem keilförmigen Preßteil 15 zu realisieren, wie dies in Fig.4 dargestellt ist. Dieser keilförmige Preßteil 15 kann in einer Art ähnlich wie vorstehend an Hand der Fig.3 beschrieben während des Wickelns des Laminats 5 eine Abstützungs-Lanze bilden, und während des Aushärtungsvorgangs wird mit Hilfe dieses Preßteils 15, der dann weiter in die Bogenstange 1 hinein gedrückt wird (gemäß der Darstellung in Fig.4 nach links), das Laminat 5 durch die Keilwirkung gegen die Formhälften 3, 4 gepreßt, was schematisch durch die kleinen Pfeile an der Oberfläche des Preßteiles 15 angedeutet ist. Dieser Preßteil 15 kann mit Hilfe von nicht dargestellten Heizeinrichtungen, z.B. einer elektrischen Widerstands-Heizeinrichtung, auf eine für den Aushärtungsvorgang günstige Temperatur erhitzt werden, und er wird nach dem Aushärten wieder gezogen, d.h. aus dem Inneren der Bogenstange 1 entfernt.

Die vorliegende, anhand der Fig.1 bis 3 erläuterte grundsätzliche Herstellungsweise erlaubt auch Bogenstangen mit konstantem Querschnitt über ihre Länge herzustellen, wie unmittelbar zu ersehen ist.

Für den Wandaufbau der Bogenstange 1 werden vorzugsweise Prepregs mit 30% bis 50%, bevorzugt 40%, Harzanteil verwendet, und es werden insbesondere mehrere Lagen längsorientierte Carbonfasern (0°) in Kombination mit einer oder mehreren (Zwischen) Lagen aus einem dünnen Glasfasergewebe (0°/90°) verwendet, wodurch trotz der dünnen Wandstärke eine hohe Eindrückfestigkeit erreicht und ein Aufspleißen der Bogenstange 1 sicher verhindert wird. Die Wandstärken der hohlen, rohrförmigen Bogenstangen 1 können beispielsweise im Fall von Geigen-/Bratschen-Bögen 0,3 mm bis 1 mm betragen; für Cello-Bögen kann die Wandstärke 0,4 bis 2,5 mm, insbesondere 0,4 bis 1,5 mm, betragen, und für Baß-Bögen kann die Wandstärke bei 0,5 bis 3 mm, insbesondere 0,5 bis 2 mm, liegen. Besonders bevorzugt werden Wandstärken von ca. 0,7 mm für Geigenbögen, ca. 0,8 mm für Cello-Bögen und ca. 1 mm für Kontrabaß-Bögen. Als Harz für den Faserverbundstoff können hierfür an sich bekannte Harze, insbesondere Epoxy-, Polyester- oder Phenolharze, oder aber Thermoplaste eingesetzt werden.

In Fig.5 ist schematisch der Aufbau einer Wand 7 einer fertigen hohlen Bogenstange 1 in Verbindung mit einem in situ verbleibenden Folienschlauch 6 veranschaulicht. Dabei ist eine innere Lage 16 mit querorientierten Fasern, vorzugsweise Glasfasern, sowie darüber eine äußere Lage 17 mit längsorientierten Fasern, vorzugsweise Carbonfasern, gezeigt. An der Außenseite ist weiters eine als Dekor sowie zur Erzielung einer glatten, porenfreien Oberfläche verwendete Deckfolie 18 angebracht, die im Zuge der Herstellung als erstes in die Form eingelegt wird, bevor das jeweilige Fasermaterial 5 bzw. 16, 17 in die Form eingebracht wird. Eine derartige Deck- bzw. Dekorfolie 18 bildet dabei nicht nur einen dekorativen Überzug an der fertigen Bo-genstange 1, sie verhindert auch bei der Herstellung einen Harzaustritt in der Form-Trennebene, so daß entsprechende Nachbearbeitungen, etwa zum Entgraten, erübrigt werden. Auch ist das sogenannte "Eintrennen" der Form (d.h. das Behandeln mit einem Trennmittel, um die Bogenstange 1 nach der Herstellung leichter entformen zu können) nicht erforderlich, da die Deckfolie 18 ein leichtes Entformen der Bogenstange ermöglicht.

Vorstehend wurde bereits auf die Herstellung unter Verwendung von vorimprägnierten Faserwerkstoffen, von sogenannten Prepregs, hingewiesen. Selbstverständlich wäre es aber auch möglich, harzfreie Fasermaterialien in die Form einzubringen und diese danach mit Kunststoff bzw. Harz durch Einpinseln zu tränken, um so das faserverstärkte Kunststoffmaterial für die Herstellung der Bogenstangen 1 zu erhalten.

Eine weitere vorteilhafte Möglichkeit zur Herstellung der Bogenstangen 1 besteht auch darin, sog. Preforms in die Form 3, 4 einzulegen, d.h. Faserverbundmaterialien, die noch kein Kunstharz bzw. Kunststoffmaterial enthalten, die jedoch in einer geeigneten Form - hier beispielsweise in Röhrenform - bereits fixiert sind, etwa durch Verweben oder insbesondere durch Nadeln, so daß eine Art Vlies- oder Filz-Werkstoff erhalten wird. Nach Einlegen dieser Preforms oder aber nach Einlegen sonstiger Faserwerkstoffe (ohne vorhergehende vorläufige Formfixierung) kann dann vor Zuleitung des Kunstharzmaterials eine sogenannte Drapierung erfolgen, d.h. das Fasermaterial wird über den Folienschlauch 6 oder aber die Lanze 9 innen mit Druck beaufschlagt, so daß das Fasermaterial gegen die Formflächen gedrückt wird. Im Anschluß daran wird dann, unter Aufrechterhaltung des Innendrucks, das Kunststoffmaterial injiziert, wobei der Innendruck beispielsweise um 1 bis 2 bar höher sein kann als der Injektionsdruck des Kunststoffmaterials.

## Patentansprüche

1. Verfahren zum Herstellen einer hohlen Streichinstrument-Bogenstange (1), wobei ein Faser-Material sowie aushärtbarer Kunststoff in eine Form (3,4) über einem hohlen und/oder entfernbaren Kern (6, 9, 15) eingebracht werden und danach das gebildete faserverstärkte Kunststoffmaterial (5) in der Form (3, 4) unter Aufbringung eines Innendrucks im bzw. durch den Kern (6, 9, 15) ausgehärtet wird.

2. Verfahren nach Anspruch 1, **dadurch gekennzeichnet, dass** ein Innendruck (Pᵢ) in der Größenordnung von einigen bar, beispielsweise 3 bis 15 bar, aufgebracht wird.

3. Verfahren nach Anspruch 1 oder 2, **dadurch gekennzeichnet, dass** ein unter Druck expandierender hohler Kern (6), z.B. ein Folienschlauch oder ein dünnwandiges Rohr, verwendet wird.

4. Verfahren nach Anspruch 3, **dadurch gekennzeichnet, dass** das Innere des hohlen Kerns (6) mit einem Druckmedium beaufschlagt wird.

5. Verfahren nach Anspruch 4, **dadurch gekennzeichnet, dass** das Innere des hohlen Kerns (6) mit einem gasförmigen Druckmedium, z.B. Luft, beaufschlagt wird.

6. Verfahren nach Anspruch 4, **dadurch gekennzeichnet, dass** das Innere des hohlen Kerns (6) mit einem flüssigen Druckmedium beaufschlagt wird, das vorzugsweise temperiert wird.

7. Verfahren nach einem der Ansprüche 3 bis 6, **dadurch gekennzeichnet, dass** in das Innere des hohlen Kerns (6) eine als Abstützung beim Legen des Fasermaterials wirksame Lanze (9) eingeführt wird.

8. Verfahren nach Anspruch 7, **dadurch gekennzeichnet, dass** durch die Lanze (9) das Druckmedium zugeführt wird.

9. Verfahren nach Anspruch 1, 4 oder 7, **dadurch gekennzeichnet, dass** zum Aufbringen des Innendrucks (Pᵢ) ein keilförmiger Pressteil (15), der gegebenenfalls durch die Abstützungs-Lanze (9) gebildet wird, innerhalb des Fasermaterials (5) vorbewegt wird.

10. Verfahren nach einem der Ansprüche 1 bis 9, **dadurch gekennzeichnet, dass** das Fasermaterial (5) in mehreren Lagen (16, 17) angebracht wird.

11. Verfahren nach Anspruch 10, **dadurch gekennzeichnet, dass** die Lagen (16, 17) mit längsorientierten Fasern, vorzugsweise Carbonfasern, und mit querorientierten Fasern, vorzugsweise Glasfasergewebe, angebracht werden.

12. Verfahren nach einem der Ansprüche 1 bis 11, **dadurch gekennzeichnet, dass** als faserverstärktes Kunststoffmaterial (5) Prepregs mit einem Harzanteil von 30%-50%, vorzugsweise ca. 40%, verwendet werden.

13. Verfahren nach einem der Ansprüche 1 bis 11, **dadurch gekennzeichnet, dass** als Fasermaterial (5) Preforms in die Form eingebracht werden, wonach der hohle Kern (6, 9) mit einem Druckmedium beaufschlagt und der Kunststoff unter Druck in die Form eingespritzt wird.

14. Verfahren nach einem der Ansprüche 1 bis 13, **dadurch gekennzeichnet, dass** vor dem Einbringen des Fasermaterials (5) eine Deckfolie (18) in die Form eingelegt wird.

## Claims

1. A method of manufacturing a hollow bow stick (1) for a string instrument, wherein a fibre material as well as a curable synthetic material are introduced in a mould (3, 4) via a hollow and/or removable core (6, 9, 15) and, subsequently, the formed fibre-reinforced synthetic material (5) is cured in the mould (3, 4) under application of an internal pressure in, or through, respectively, the core (6, 9, 15).

2. A method according to claim 1, **characterised in that** an internal pressure (Pᵢ) in the order of a few bar, 3 to 15 bar, e.g., is applied.

3. A method according to claim 1 or 2, **characterised in that** a hollow core (6) which expands under pressure, a foil tube or a thin-walled pipe, e.g., are used.

4. A method according to claim 3, **characterised in that** a pressure medium is applied to the interior of the hollow core (6).

5. A method according to claim 4, **characterised in that** a gaseous pressure medium, e.g. air, is applied to the interior of the hollow core (6).

6. A method according to claim 4, **characterised in that** a liquid pressure medium which preferably is temperature-adjusted, is applied to the interior of the hollow core (6).

7. A method according to any one of claims 3 to 6, **characterised in that** a lance (9), acting as a support when the fibre material is laid, is introduced into the interior of the hollow core (6).

8. A method according to claim 7, **characterised in that** the pressure medium is supplied through the lance (9).

9. A method according to claim 1, 4 or 7, **characterised in that** a wedge-shaped pressing part (15) which optionally is formed by the supporting lance (9) is moved foward within the fibre material (5) so as to apply the internal pressure (Pᵢ).

10. A method according to any one of claims 1 to 9, **characterised in that** the fibre material (5) is applied in several layers (16, 17).

11. A method according to claim 10, **characterised in that** the layers (16, 17) are applied with longitudinally oriented fibres, preferably carbon fibres, and transversely oriented fibres, preferably glass fibre tissue.

12. A method according to any one of claims 1 to 11, **characterised in that** prepregs having a resin portion of 30% to 50%, preferably approximately 40%, are used as the fibre-reinforced synthetic material.

13. A method according to any one of claims 1 to 11, **characterised in that** as fibre material (5) preforms are introduced into the mould, whereupon a pressure medium is applied to the hollow core (6, 9) and the synthetic material is injected into the mould under pressure.

14. A method according to any one of claims 1 to 13, **characterised in that** a cover film (18) is laid into the mould before the fibre material (5) is introduced.

## Revendications

1. Procédé de fabrication d'une baguette creuse pour un archet d'instrument à cordes (1) où un matériau fibreux et une matière plastique durcissable sont introduits dans un moule (3, 4) par le biais d'un noyau creux et/ou démontable (6, 9, 15) et ensuite la matière plastique formée et renforcée par des fibres (5) est durcie dans le moule (3, 4) sous l'application d'une pression interne dans ou à travers le noyau (6, 9, 15).

2. Procédé selon la revendication 1, **caractérisé en ce qu'**une pression interne (P₁) de l'ordre de quelques bars, par exemple de 3 à 15 bars, est appliquée.

3. Procédé selon la revendication 1 ou 2, **caractérisé en ce qu'**un noyau creux en expansion (6) sous pression, par exemple un tuyau flexible ou un tube à paroi mince, est utilisé.

4. Procédé selon la revendication 3, **caractérisé en ce que** l'intérieur du noyau creux (6) est soumis à un agent de pressurisation.

5. Procédé selon la revendication 4, **caractérisé en ce que** l'intérieur du noyau creux (6) est soumis à un agent de pressurisation gazeux, par exemple de l'air.

6. Procédé selon la revendication 4, **caractérisé en ce que** l'intérieur du noyau creux (6) est soumis à un agent de pressurisation liquide, de préférence tempéré.

7. Procédé selon l'une des revendications 3 à 6, **caractérisé en ce qu'**une lance (9) servant d'appui lors du dépôt du matériau fibreux, est introduite à l'intérieur du noyau creux (6).

8. Procédé selon la revendication 7, **caractérisé en ce que** l'agent de pressurisation est introduit par la lance (9).

9. Procédé selon la revendication 1, 4 ou 7, **caractérisé en ce que**, pour établissement de la pression interne (P₁) une pièce en forme de coin (15), constituée le cas échéant par la lance d'appui (9), est déplacée vers l'avant à l'intérieur du matériau fibreux (5).

10. Procédé selon l'une des revendications 1 à 9, **caractérisé en ce que** le matériau fibreux (5) est appliqué en plusieurs couches (16, 17).

11. Procédé selon la revendication 10, **caractérisé en ce que** les couches (16, 17) sont appliquées avec des fibres orientées dans le sens longitudinal, de préférence des fibres de carbone, et avec des fibres orientées transversalement, de préférence des tissus de fibres de verre.

12. Procédé selon l'une des revendications 1 à 11, **caractérisé en ce que** des feuilles pré-imprégnées avec un pourcentage de 30% à 50% de résine, de préférence 40%, sont utilisées comme une matière plastique renforcée par des fibres (5).

13. Procédé selon l'une des revendications 1 à 11, **caractérisé en ce que** des préformes sont introduites dans le moule comme des fibres (5), après quoi le noyau creux (6, 9) est soumis à un agent de pressurisation et la matière plastique est injectée sous pression dans le moule.

14. Procédé selon l'une des revendications 1 à 13, **caractérisé en ce qu'**une feuille de couverture (18) est placée dans le moule avant l'introduction du matériau fibreux (5).
